# EUROPÄISCHE PATENTSCHRIFT

(11) **EP 1 919 685 B1**
(45) Veröffentlichungstag und Bekanntmachung des Hinweises auf die Patenterteilung: **28.10.2015**
(21) Anmeldenummer: 06708796.5
(22) Anmeldetag: 17.03.2006
(51) Int. Cl.: B29C 45/04, B29C 45/16

(54) **HORIZONTALSPRITZGIESSMASCHINE MIT DREHEINRICHTUNG**
HORIZONTAL INJECTION MOULDING MACHINE COMPRISING A ROTARY DEVICE
MACHINE DE MOULAGE PAR INJECTION HORIZONTALE COMPORTANT UN DISPOSITIF ROTATIF

(30) Priorität: 08.04.2005 DE 102005016239
(43) Veröffentlichungstag der Anmeldung: 14.05.2008
(73) Patentinhaber: KraussMaffei Technologies GmbH, 80997 München (DE)
(72) Erfinder: GLASHAGEN, Bernd, 81241 München (DE); HOLZINGER, Reinhard, 81545 München (DE)
(74) Vertreter: Wilhelm, Ludwig
(86) Internationale Anmeldenummer: PCT/EP2006/060838
(87) Internationale Veröffentlichungsnummer: WO 2006/106036

(56) Entgegenhaltungen:
- EP-A- 1 226 916
- EP-A- 1 512 512
- WO-A-99/28108
- WO-A-2005/077637
- DASSOW J: "FUER ALLE FAELLE GERUESTET, TECHNOLOGIEFUEHRERSCHAFT DURCH MEHRKOMPONENTENTECHNIK" KUNSTSTOFFE, CARL HANSER VERLAG, MUNCHEN, DE, Bd. 92, September 2002 (2002-09), Seiten 105-109, XP002237523 ISSN: 0023-5563
- PATENT ABSTRACTS OF JAPAN Bd. 018, Nr. 650 (M-1719), 9. Dezember 1994 (1994-12-09) -& JP 06 254906 A (MITSUBISHI HEAVY IND LTD), 13. September 1994 (1994-09-13)

## Beschreibung

Die Erfindung betrifft eine Horizontalspritzgießmaschine mit einer zwischen den Formaufspannplatten angeordneten Dreheinrichtung für Formhälften von Spritzgießwerkzeugen.

Die WO 01/010624 offenbart eine Zwei-Platten-Horizontalspritzgießmaschine mit einer feststehenden und einer beweglichen Formaufspannplatte sowie mit einer zwischen den Formaufspannplatten angeordneten und parallel zur Maschinenlängsachse verschiebbaren und um eine vertikale Achse drehbaren Dreheinrichtung für Spritzgießwerkzeuge. Die Dreheinrichtung umfasst eine mittels erster Antriebsmittel in Maschinenlängsrichtung verschiebbare Grundplatte, auf der ein Drehteller angordnet ist, der mit zweiten Antriebsmitteln um die vertikale Achse drehbar ist. Diese Art von Horizontalspritzgießmaschine hat den Vorteil, dass die Dreheinrichtung völlig von zwischen den Formaufspannplatten verlaufenden Holmen bzw. Säulen losgelöst sein kann, so dass diese weder mit Gewichts- noch mit Drehmomenten belastet werden. Dies ist insbesondere bei Zwei-Platten-Horizontalspritzgießmaschinen von Bedeutung, da bei diesen die Säulen mitbewegt werden und sich geringfügige Änderungen im Abstand der Säulen zueinander negativ auf eine an diesen Säulen geführte und abgestützte Dreheinrichtung für Sprizgießwerkzeuge auswirken würde. Ausserdem ist das Spritzgießwerkzeug im eingebauten Zustand von beiden Seiten sowie von oben frei zugänglich. Bei der Drehbewegung ergeben sich keine Einschränkungen hinsichtlich der Größe der einbaubaren Spritzgießwerkzeuge ausser durch die Öffnungsweite der Schließeinheit der Spritzgießmaschine. Nachteilig ist jedoch zum Einen, dass die Medienzufuhr bei dieser Spritzgießmaschine von unten über einen durch die Grundplatte und den Drehteller hindurchgeführten Drehverteiler mit einem geeigneten Drehzapfen mit einer Drehdurchführung erfolgt. Die Montage und Demontage dieses im Maschinenbett befindlichen Drehverteilers, z.B. zu Wartungszwecken, gestaltet sich schwierig, da die Zugänglichkeit stark eingeschränkt ist. Ferner ist beim Verfahren der Dreheinrichtung entlang der Maschinenlängsachse sowohl beim Anfahren als auch beim Abbremsen mit Kippmomenten zu rechnen, so dass als Linearführungen für die Grundplatte geeignete Gleitführungen, z.B. mit einem Schwalbenschwanzquerschnitt, vorgesehen werden müssen, was die Kosten erhöht.

Aus der WO 99/28108 ist eine Drei-Platten-Horizontalspritzgießmaschine bekannt, bei der eine bewegliche Formaufspannplatte an zwischen einer feststehenden Formaufspannplatte und einer Abstützplatte sich erstreckenden und in diesen befestigten, oberen und unteren Säulen längsverschieblich ist. Zwischen den Formaufspannplatten ist eine parallel zur Maschinenlängsachse verschiebbare Dreheinrichtung für Formhälften von Spritzgießwerkzeugen vorgesehen. Bei dieser Horizontalspritzgießmaschine weist die Dreheinrichtung obere und untere an den Säulen abgestützte und mittels hydraulischer Stellantriebe entlang der Säulen verfahrbare Träger auf, zwischen denen ein Formhälftenträger einsetzbar ist. Hierzu sind in den beiden Trägern Dreheinheiten vorgesehen, die jeweils eine durch den Träger hindurchgeführte und mittels mehrerer Lager drehbar in diesem gelagerte Welle oder Drehzapfen aufweisen, an deren einander zugewandten Enden Haltemittel zur Montage des Formhälftenträgers zwischen den beiden Wellen und damit zwischen den beiden Trägern vorgesehen sind. In jeder Welle sind Kanäle oder Leitungen zum Zu- und Abführen von Medien wie Gasen, Flüssigkeiten oder elektrischer Strom zu dem Formenträger vorgesehen. Zum Verfahren des Formhälftenträgers entlang der Maschinenlängsachse sind zwischen der beweglichen Formaufspannplatte und den oberen und unteren Trägern hydraulische Stellantriebe vorgesehen. Bei dieser Horizontalspritzgießmaschine treten zwar nicht die oben erwähnten Kippmomente beim Anfahren und Abbremsen auf. Nachteilig an dieser Drei-Platten-Horizontalspritzgießmaschine ist jedoch, dass die unteren Säulen je nach Schwere der Formhälftenträger mit einem nicht unerheblichem Gewicht belastet werden. Aus der EP1226916A1 und dem Artikel "Für alle Fälle gerüstet" von Jörg Dassow in KU Kunststoffe, Jahrgang 92, September 2002, Seiten 105-109 sind weitere Spritzgießmaschinen der vorgenannten Art bekannt.

In der DE 19733667 A1 wird für eine ähnliche Drei-Platten-Horizontalspritzgießmaschien im Falle besonders schwerer Formhälftenträger empfohlen, den unteren Träger zusätzlich mittels Rollen und/oder Kufen auf dem Maschinenbett abzustützen.

Aus der WO 03/013824 A1 ist eine Zwei-Platten-Horizontalspritzgießmaschine bekannt, bei der als Dreheinrichtung für Spritzgießwerkzeuge eine Wendeplatte zur Aufnahme von Formhälften von Spritzgießwerkzeugen stationär in einem geschlossenen massiven Tragrahmen oder einem zu einer Seite hin offenen C-förmigen Tragrahmen beidseitig um eine vertikale Achse drehbar gelagert ist und die Formaufspannplatten relativ zu diesem Tragrahmen verfahrbar sind. Hierzu sind am äußeren Rand des Tragrahmens zu beiden Seiten oben und unten jeweils diagonal zueinander Halterungen zur Befestigung von hydraulischen Stellantrieben vorgesehen, mit denen die Formaufspannplatten auf den Tragrahmen zu- und von diesem wegbewegt werden können. Da bei dieser Horizontalspritzgießmaschine die Formaufspannplatten auf stabilen Gleitschuhen montiert sind und mit diagonal zueinander angeordneten Stellantrieben verfahren werden, kann auf aufwändige Gleitführungen mit einem Schwalbenschwanzquerschnitt wie eingangs beschrieben verzichtet werden. Ein weiterer Vorteil gegenüber der oben beschriebenen Horizontalspritzgießmaschine besteht darin, dass eine Medienzufuhr über den Tragrahmen von oben und von unten möglich ist. Nachteilig ist jedoch, dass der Tragrahmen die Größe der Formhälften von Spritzgießwerkzeugen beschränkt, die auf die Wendeplatte montiert werden können. Insbesondere im Falle eines massiven Tragrahmens ist der Raum für die Wendeplatte und die auf ihr montierbaren Formhälften vergleichsweise klein.

Ausgehend von diesem Stand der Technik liegt der Erfindung die Aufgabe zugrunde, eine Horizontalspritzgießmaschine anzugeben, die einerseits eine getrennte Medienzufuhr (z.B. warm/kalt oder Wasser/Strom) ermöglicht und die andererseits keine Beschränkungen aufweist, was den Einbau von Spritzgießwerkzeugen angeht und bei der gleichwohl die Säulen im wesentlichen unbelastet bleiben.

Die Lösung dieser Aufgabe erfolgt durch Horizontalspritzgießmaschinen gemäß den nebengeordneten Ansprüchen 1 und 7. Vorteilhafte Ausgestaltungen und Weiterentwicklungen finden sich in den Unteransprüchen.

Dadurch, dass bei der ersten Lösung eine stationäre Dreheinrichtung mit Grundplatte und Drehteller vorgesehen ist, ergeben sich im Unterschied zu der stationären Dreheinrichtung mit Rahmen keine Beschränkungen hinsichtlich der Größe der einbaubaren Spritzgießwerkzeuge und das Gewicht dieser Dreheinrichtung kann vollständig in das Maschinenbett eingeleitet werden. Die Säulen bleiben von der Dreheinrichtung unbelastet, was gerade bei mitbewegten Säulen von Vorteil ist. Über das an den oberen Säulen vorgesehene und auf dem Formhälftenträger abstützbare Joch kann eine Medienversorgung für die Formhälften vorgesehen werden. Wenn sowohl eine obere als auch eine untere Medienversorgung vorgesehen wird, kann beispielsweise kaltes Wasser über den unteren Drehverteiler und heißes Wasser über den oberen Drehverteiler zugeführt werden. Dadurch wird der Drehteller und seine Lagerung auf der Grundplatte nicht einer unnötigen thermischen Ausdehnung ausgesetzt, was sich negativ auf die Lagerung und den Antrieb des Drehtellers auswirken könnte. Falls nur ein Drehverteiler erforderlich ist, kann dieser oben an dem Joch vorgesehen werden, was die Wartungsarbeit vereinfacht, da das Wartungspersonal nicht mühsam in das Maschinenbett klettern und unter der Grundplatte hantieren muss. Wenn die Verfahrbewegung der Formaufspannplatten mit hydraulischen Stellantrieben vorgenommen werden kann, die zwischen dem Joch und den beiden Formaufspannplatten einerseits sowie zwischen der Grundplatte und den Formaufspannplatten andererseits angeordnet werden, kann die Schließeinheit vergleichsweise kurz gebaut werden bzw. die Plastifizier- und Einspritzaggregate hinter den Formaufspannplatte sind gut zugänglich.

Die zweite Lösung mit der verfahrbaren Dreheinrichtung bietet insofern eine Verbesserung gegenüber dem Stand der Technik, als bei Verwendung von oberen Stellantrieben zwischen Joch und feststehender Formaufspannplatte in Verbindung mit unteren Stellantrieben keine Kippmomente beim Anfahren und Abbremsen der Dreheinrichtung auftreten und das Joch gleichzeitig als Montagestation für einen oberen Drehverteiler hergenommen werden kann. Das Joch bietet sozusagen eine Doppelfunktion. Bei einer Abstützung des Gewichts des Jochs über entsprechende Gleit- oder Rollenlager auf der Oberseite des Formhälftenträgers wird auch das Gewicht des Jochs über den Formhälftenträger, den Drehteller und die Grundplatte in das Maschinenbett eingeleitet, d.h. die Säulen bleiben nahezu unbelastet. Lediglich eventuell auftretende Reibungskräfte zwischen Innen- und Aussenteil des Drehverteilers würden bei der Drehbewegung zu den Säulen geleitet. Durch Verwendung geeigneter Lager können diese Reibungskräfte jedoch vernachlässigt werden.

Bevorzugtes Anwendungsgebiet sind Zwei-Platten-Horizontalspritzgießmaschinen, bei denen die Säulen systembedingt mitbewegt werden und es vorteilhaft ist, wenn diese völlig frei von Gewichts- und Drehmomenten einer Dreheinrichtung für Spritzgießwerkzeuge sind.

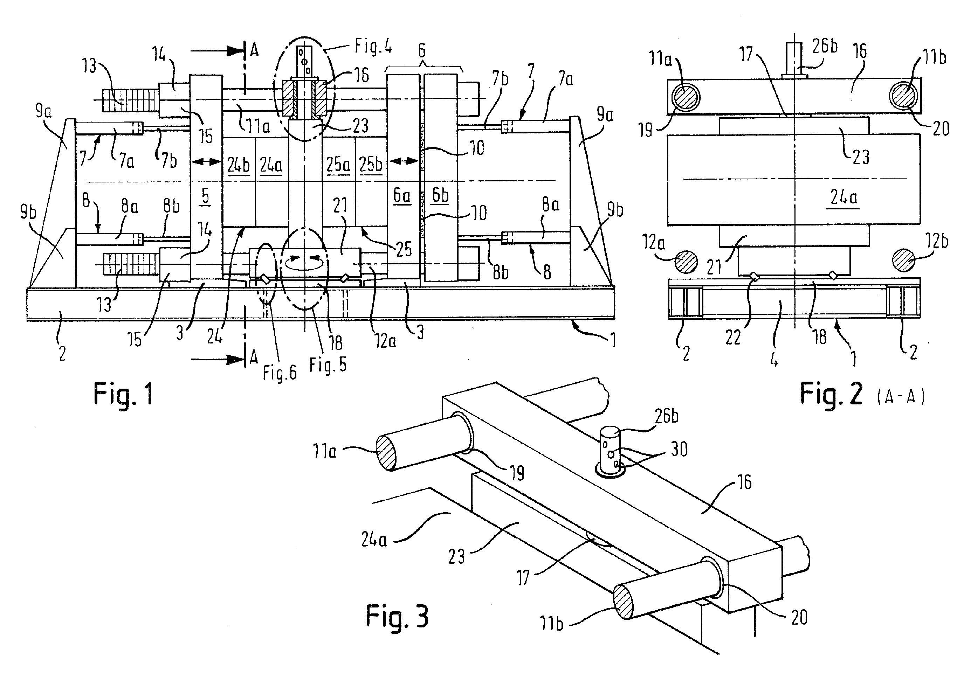

Nachfolgend soll die Erfindung anhand von Ausführungsbeispielen und unter Bezugnahme auf die Figuren 1 bis 15 nächer erläutert werden.

Eine erste Ausführungsform der Erfindung soll unter Bezugnahme auf die Figuren 1 bis 6 anhand einer Zwei-Platten-Horizontalspritzgießmaschine mit einer mittig angeordneten stationären Dreheinrichtung beschrieben werden. Auf einem Maschinenbett 1 mit zwei Längsträgern 2 sowie Querstreben 4 sind zwei Formaufspannplatten 5 und 6 auf massiven Gleitschuhen 3 verschieblich abgestützt. Die beiden Formaufspannplatten 5 und 6 können mittels diagonal zueinander angeordneter hydraulischer Stellantriebe 7 (oben) und 8 (unten) verfahren werden. Diese sind einerseits (beispielsweise mit den Zylindern 7a, 8a) an mit dem Maschinenbett verbundenen Stützstreben 9a und 9b und andererseits (beispielsweise mit ihren Kolbenstangen 7b, 8b) an den Formaufspannplatten befestigt. Die Formaufspannplatte 6 selbst besteht aus der eigentlichen Formaufspannplatte 6a und einer Druckplatte 6b, zwischen denen vier Druckkissen 10 zum Aufbringen des Schließdrucks vorgesehen sind, wobei in der Figur 1 nur die hinteren Druckkissen sichtbar sind. Zwischen den beiden Formaufspannplatten sind oben und unten jeweils zwei parallel zueinander und in einer Ebende liegende Säulen 11a,11b und 12a,12b befestigt, von denen in der Figur 1 nur die hinteren Säulen 11a und 12a sichtbar sind. Diese Säulen durchsetzen die in der Figur 1 linke Formaufspannplatte 5 und weisen an ihrem überstehenden Ende Rillen 13 auf, in die halbschalenförmige Verriegelungsbacken 14 und 15 eingefahren werden können. In dem in Figur 1 dargestellten Zustand sind die Verriegelungsbacken zugefahren und die Schließeinheit verriegelt. Auf einer auf oder in dem Maschinenbett 1 befestigten Grundplatte 18 ist ein Drehteller 21 mittels eines geeigneten Lagers, vorliegend eines Kreuzrollenlagers 22, abgestützt und um eine vertikale Achse drehbar gelagert. Auf dem Drehteller 21 ist ein Formhälftenträger 23, der im vorliegenden Beispeil als sogenannte Wendeplatte ausgebildet ist, befestigt und trägt Formhälften 24a und 25a von zwei Spritzgießformen 24 und 25. Die korrespondierenden Formhälften 24b und 25b sind auf den Formaufspannplatten 5 und 6a angebracht.

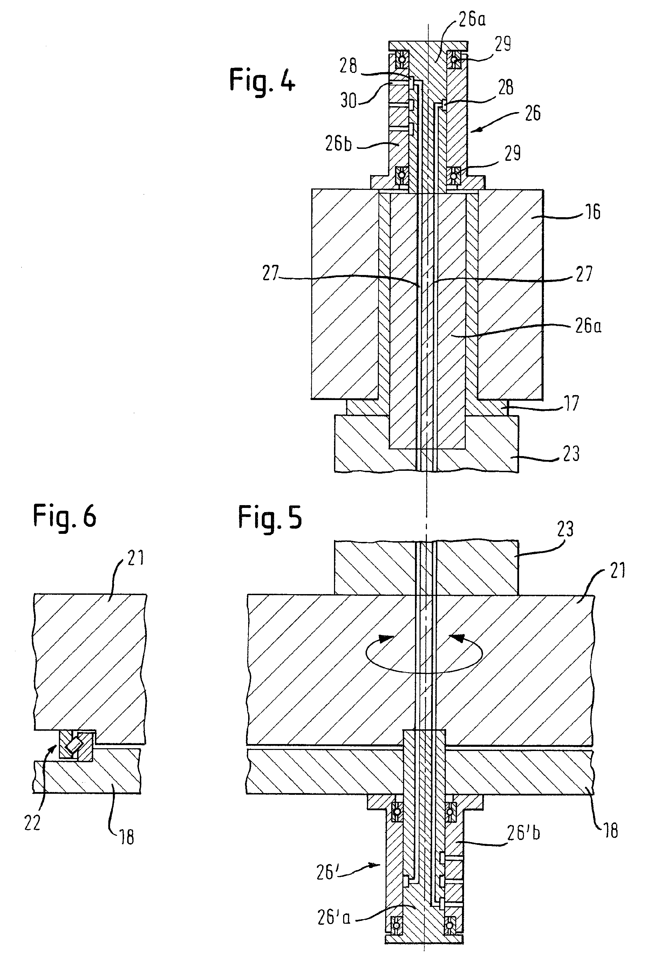

Oberhalb der Wendeplatte 23 ist ein Joch 16 über eine erste Gleitbuchse 17 auf der Oberseite der Wendeplatte 23 abgestützt und dieser gegenüber drehbar. Die Säulen 11a und 11 b sind durch weitere Gleitbuchsen 19 und 20 in passenden Bohrungen durch das Joch 16 hindurchgeführt. Die erste Gleitbuchse 17 erstreckt sich durch eine passende Ausnehmung in der Mitte des Jochs 16 und dient zur Durchführung eines Drehverteilers bzw. einer Drehdurchführung 26 für die Zufuhr von Medien wie Wasser, Öl, Luft, Strom oder sonstiges zu der Wendeplatte 23 und den Formhälften 24a, 25a (zu Einzelheiten zu diesem oberen Drehverteiler 26 siehe Figur 4). Das Innenteil 26a ist fest mit der Wendeplatte 23 verbunden und enthält Kanäle 27, die oberhalb des Jochs 16 in umlaufenden Ringnuten 28 enden und über die die gewünschten Medien zu den Formhälften zu- und abgeführt werden können. Das Aussenteil 26b ist auf dem Joch 16 befestigt und mittels oberer und unterer Lager 29 gegenüber dem Innenteil 26b drehbar gelagert. In dem Aussenteil 26 sind Anschlusskanäle 30 vorgesehen, die in die Ringnuten 28 des Innenteils 26a münden und an die Leitungen für die jeweiligen Medien angeschlossen werden können.

Ein weiterer Drehverteiler 26' ist unterhalb der Wendeplatte 23 vorgesehen und in der Figur 5 näher dargestellt. Es handelt sich um den gleichen Typ von Drehverteiler wie der oberhalb der Wendeplatte 23 angeordnete obere Drehverteiler 26. Das Innenteil 26'a ist fest mit dem Drehteller 21 oder der Wendeplatte 23 verbunden und das Aussenteil 26'b ist fest mit der Grundplatte 18 verbunden und gegenüber dem Innenteil mittels mehrerer Lager drehbar gelagert.

In der Figur 6 ist die Lagerung des Drehtellers 21 auf der Grundplatte 18 über ein Kreuzrollenlager 22 in vergrößertem Maßstab dargestellt. Anstelle des Kreuzrollenlagers können auch andere geeignete Lager vorgesehen werden. Als Drehantrieb können an sich bekannte und daher hier nicht näher dargestellte und beschriebene Drehantriebe vorgesehen werden. Beispielsweise kann am Aussenumfang des Drehtellers ein Zahnkranz vorgesehen werden, in das ein von einem Elektro- oder Hydromotor antreibbares Zahnrad eingreift.

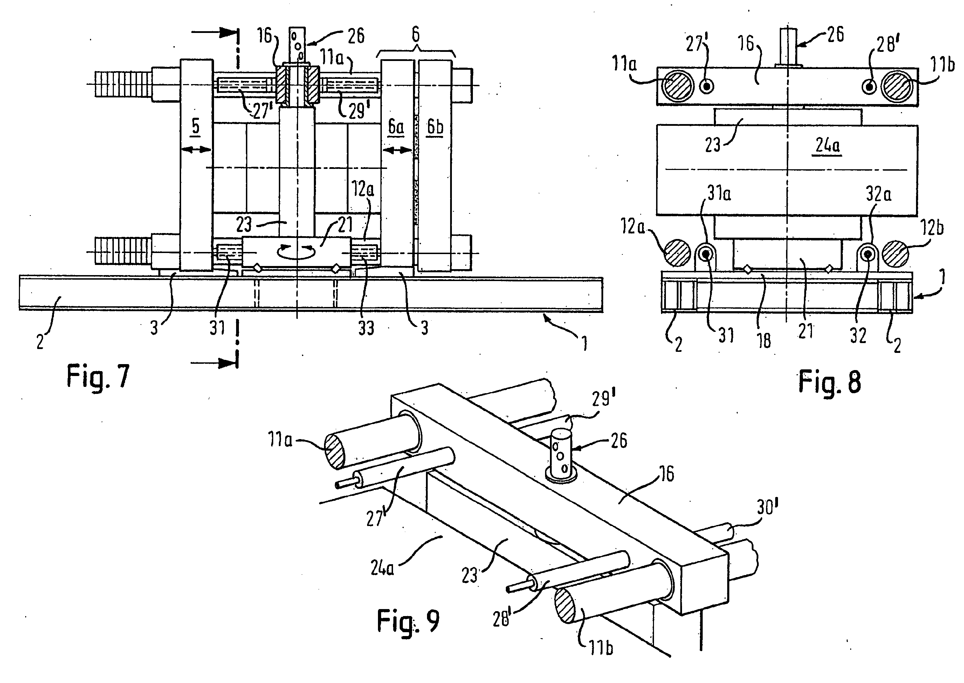

Eine Abwandlung der zuvor beschriebenen Zwei-Platten-Horizontalspritzgießmaschine mit stationärer Dreheinrichtung ist in den Figuren 7 bis 9 dargestellt. Gleiche Bezugszeichen bezeichnen gleiche Teile. Im Unterschied zu der Ausführungsform gemäß den Figuren 1 bis 6 sind jedoch die außerhalb des Formaufspannbereichs liegenden hydraulischen Stellantriebe durch hydraulische Stellantriebe zwischen der Dreheinrichtung und den Formaufspannplatten ersetzt worden. Wie den Figuren 7 bis 9 entnommen werden kann, sind zwischen dem Joch 16 und den beiden Formaufspannplatten 5 und 6 zu beiden Seiten des Jochs im Abstand zu dem oberen Drehverteiler 26 insgesamt vier hydraulische Stellantriebe 27', 28', 29' und 30' vorgesehen. Die Stellantriebe 27' und 28' sind zwischen dem Joch 16 und der in der Figur 7 linken Formaufspannplatte 5 angebracht, während die Stellantriebe 29' und 30' zwischen dem Joch 16 und der in der Figur 7 rechten Formaufspannplatte 6 angebracht sind. Die Stellantriebe 27' und 29' liegen fluchtend auf einer Achse, ebenso die Stellantriebe 28' und 30' Damit wird sichergestellt, dass die in das Joch 16 eingeleiteten Kräfte sich gegenseitig aufheben können und das Joch 16 in Bezug auf die Säulen 11a und 11b nicht verkantet In gleicher Weise sind unterhalb der Wendeplatte 23 vier hydraulische Stellantriebe 31, 32, 33 und 34 vorgesehen, die einerseits an mit der Grundplatte 18 verbundenen Laschen 31a bis 34a befestigt sind und andererseits an den Formaufspannplatten. Die Stellantriebe 31 und 33 sowie die Stellantriebe 32 und 34 sind jeweils fluchtend auf einer Achse angeordnet. Aufgrund der gewählten Darstellung sind die Laschen 33a und 34a ebensowenig sichtbar wie der hydraulische Stellantrieb 34 (der sich in der Figur 1 unten rechts im Vordergrund vor dem Stellantrieb 33 befinden würde).

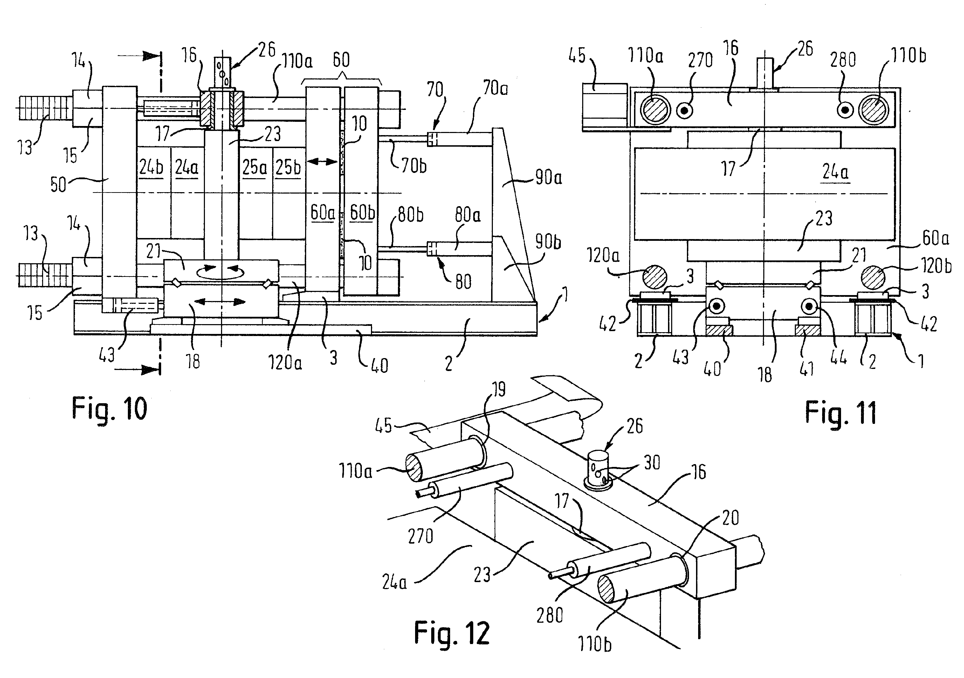

Eine weitere Ausführungsform der Erfindung soll unter Bezugnahme auf die Figuren 10 bis 12 beschrieben werden. Im Unterschied zu den oben beschriebenen Ausführungsformen ist eine der Formaufspannplatten fest auf dem Maschinenbett 1 installiert, vorliegend die linke Formaufspannplatte, und die Dreheinrichtung kann entlang der Maschinenlängsachse verfahren werden. Auf einem Maschinenbett 1 ist eine feststehende Formaufspannplatte 50 befestigt und eine bewegliche Formaufspannplatte 60 auf Gleitschuhen 3 und geeigneten Linearführungen 42 verschieblich abgestützt. Die bewegliche Formaufspannplatte 60 kann mittels diagonal zueinander angeordneter hydraulischer Stellantriebe 70 und 80 verfahren werden. Diese sind einerseits (beispielsweise mit den Zylindern 70a, 80a) an mit dem Maschinenbett verbundenen Stützstreben 90a und 90b und andererseits (beispielsweise mit ihren Kolbenstangen 70b, 80b) an der beweglichen Formaufspannplatte 60 befestigt. Die Formaufspannplatte 60 selbst besteht wie in den zuvor beschriebenen Beispielen aus der eigentlichen Formaufspannplatte 60a und einer Druckplatte 60b, zwischen denen vier Druckkissen 10 zum Aufbringen des Schließdrucks vorgesehen sind, wobei in der Figur nur die hinteren Druckkissen sichtbar sind. In der beweglichen Formaufspannplatte 60 sind oben und unten jeweils zwei parallel zueinander und in einer Ebende liegende Säulen 110a,110b und 120a,120b befestigt, von denen in der Figur 10 nur die hinteren Säulen 110a und 120a sichtbar sind. Diese Säulen durchsetzen die feststehende Formaufspannplatte 50 und weisen an ihrem überstehenden Ende Rillen 13 auf, in die Verriegelungsbacken 14, 15 eingefahren werden können. Auf weiteren Linearführungen 40 und 41 ist die Grundplatte 18 der Dreheinrichtung mittels hydraulischer Stellantriebe 43 und 44 parallel zur Maschinenlängsachse verfahrbar. Der Aufbau der Dreheinrichtung selbst ist im übrigen identisch mit den Ausführungsformen gemäß den Figuren 1 bis 9.

Oberhalb der Wendeplatte 23 ist ein Joch 16 über eine erste Gleitbuchse 17 auf der Oberseite der Wendeplatte 23 abgestützt und dieser gegenüber drehbar. Die Säulen 110a und 110b sind durch weitere Gleitbuchsen 19 und 20 in passenden Bohrungen durch das Joch 16 hindurchgeführt. Die erste Gleitbuchse 17 erstreckt sich durch eine passende Ausnehmung in der Mitte des Jochs 16 und dient zur Durchführung eines Drehverteilers 26 für die Zufuhr von Medien wie Wasser, Öl, Luft, Strom oder sonstiges. Der Drehverteiler selbst entspricht demjenigen gemäß den Figuren 1 bis 9. Mittels eines an dem Joch 16 angebrachten Kabelschlepp 45 können die hier nicht dargestellten zu den Anschlüssen 30 in dem Drehverteiler führenden Versorgungsleitungen für die Medien die Verfahrbewegung der Dreheinrichtung flexibel mitmachen.

Zwischen dem Joch 16 und der feststehenden Formaufspannplatte 50 sind im Abstand zu dem Drehverteiler 26 zwei hydraulische Stellantriebe 270 und 280 vorgesehen. Im Zusammenwirken mit den unterhalb der Wendeplatte 23 an der Grundplatte 18 angreifenden Stellantrieben 43 und 44 kann die gesamte Dreheinrichtung ohne Gefahr von Verkippungen beim Anfahren und Abbremsen entlang der Maschinenlängsachse verfahren werden. Daher müssen die Linearführungen 40, 41 nicht mit einem speziellen die Kippmomente aufnehmenden Querschnitt wie beispielsweise einem Schwalbenschwanzquerschnitt ausgeführt sein.

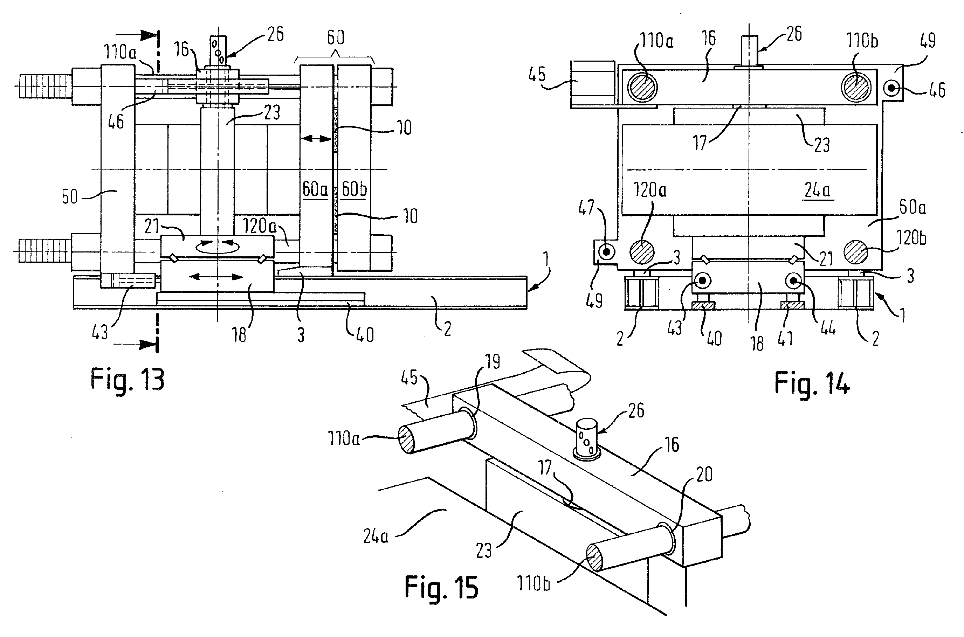

Eine Abwandlung der zuvor beschriebenen Zwei-Platten-Horizontalspritzgießmaschine ist in den Figuren 13 bis 15 dargestellt. In dieser Ausführungsform wird die Dreheinrichtung nur mittels der an der Grundplatte angreifenden Stellantriebe 43 und 44 verfahren und zwischen dem Joch 16 und der feststehenden Formaufspannplatte 50 sind keine Stellantriebe montiert. In diesem Fall kann es je nach Maschinengröße vorteilhaft sein, wenn die Linearführungen 40 und 41 einen Schwalbenschwanzquerschnitt oder dergleichen aufweisen. Ein weiterer Unterschied besteht darin, dass die Verfahrbewegung der beweglichen Formaufspannplatte 60 durch zwei diagonal zueinander angeordnete hydraulische Stellantriebe 46 und 47 bewerkstelligt wird, die einerseits an der feststehenden Formaufspannplatte 50 und andererseits an der beweglichen Formaufspannplatte 60 an Laschen 49 befestigt sind. Im übrigen sind der Aufbau und die Wirkungsweise dieser Zwei-Platten-Horizontalspritzgießmaschine mit derjenigen aus den Figuren 10 bis 12 identisch.

### Bezugszeichenliste

- 1: Machinenbett
- 2: Längsträger
- 3: Gleitschuhe
- 4: Querstreben
- 5: Formaufspannplatte
- 6: Formaufspannplatte
- 6a: Vordere Platte der Formaufspannplatte (eigentliche Formaufspannplatte)
- 6b: Druckplatte
- 7, 8: Hydraulische Stellantriebe
- 7a, 8a: Hydraulikzylinder
- 7b, 8b: Kolbenstange
- 9a, 9b: Stützstreben
- 10: Druckkissen
- 11a, 11b: Obere Säulen
- 12a, 12b: Untere Säulen
- 13: Rillen
- 14, 15: Verriegelungsbacken
- 16: Joch
- 17: erste Gleitbuchse
- 18: Grundplatte
- 19, 20: Gleitbuchsen an Säulen
- 21: Drehteller
- 22: Kreuzrollenlager
- 23: Formhälftenträger bzw. Wendeplatte
- 24: Erstes Spritzgießwerkzeug
- 24a, 24b: Formhälften des ersten Spritzgießwerkzeugs
- 25: Zweites Spritzgießwerkzeug
- 25a, 25b: Formhälften des zweiten Spritzgießwerkzeugs
- 26: Oberer Drehverteiler
- 26a: Mitrotierendes Innenteil des oberen Drehverteilers
- 26b: Feststehendes Aussenteil des oberen Drehverteilers
- 27: Kanäle
- 28: Ringnuten
- 29: Lager
- 30: Anschlußkanäle
- 26': Unterer Drehverteiler
- 26'a: Innenteil des unteren Drehverteilers
- 26'b: Aussenteil des unteren Drehverteilers
- 27' - 30': Obere hydraulische Stellantriebe
- 40, 41: Linearführungen für Grundplatte
- 42: Linearführungen für bewegliche Formaufspannplatte
- 43, 44: Hydraulische Stellantriebe
- 45: Kabelschlepp
- 46, 47: Hydraulische Stellantriebe
- 49: Befestigungslaschen
- 50: Feststehende Formaufspannplatte
- 60: Bewegliche Formaufspannplatte
- 60a: Eigentliche Formaufspannplatte
- 60b: Druckplatte
- 70, 80: Hydraulische Stellantriebe
- 70a, 80a: Hydraulikzylinder
- 70b, 80b: Kolbenstangen
- 90a, 90b: Stützstreben
- 110a, b: Obere Säulen
- 120a, b: Untere Säulen
- 270: Hydraulischer Stellantrieb
- 280: Hydraulischer Stellantrieb
- 31 - 34: Untere hydraulische Stellantriebe
- 31a - 34a: Laschen

## Patentansprüche

1. Horizontalspritzgießmaschine mit zwei auf einem Maschinenbett (1) entlang einer Maschinenlängsachse verfahrbaren Formaufspannplatten (5, 6), mit zwischen den beiden Formaufspannplatten (5, 6) verlaufenden Säulen (11a, 11 b, 12a, 12b), sowie mit einer ortsfest zwischen den Formaufspannplatten (5, 6) auf oder in dem Maschinenbett (1) angeordneten Dreheinrichtung für Formhälften (24a, 25a) von Spritzgießwerkzeugen,
**dadurch gekennzeichnet, dass**
das Gewicht der Dreheinrichtung vollständig in das Maschinenbett (1) eingeleitet wird und die Säulen (11 a, 11 b, 12a, 12b) von der Dreheinrichtung unbelastet bleiben, wobei die Dreheinrichtung eine auf oder in dem Maschinenbett (1) befestigte-Grundplatte (18) und einen auf der Grundplatte (18) um eine vertikale Achse drehbar gelagerten Drehteller (21) aufweist, dass auf dem Drehteller (21) ein Formhälftenträger (23) zur Aufnahme von Formhälften (24a, 25a) von Spritzgießwerkzeugen befestigt ist, dass auf der Oberseite des Formhälftenträgers (23) ein Drehzapfen mit Leitungen (27) für Medien vorgesehen ist, und dass ein Joch (16) mit einer Ausnehmung für den Drehzapfen auf den oberen Säulen (11 a, 11 b) angeordnet ist und mit dem Drehzapfen in Eingriff steht.

2. Horizontalspritzgießmaschine nach Anspruch 1,
**dadurch gekennzeichnet, dass**
der Drehzapfen als Drehverteiler (26) ausgebildet ist, nämlich mit einem mit dem Formhälftenträger (23) verbundenen und mit diesem mitrotierenden Innenteil (26a) sowie einem mit dem Joch (16) verbundenen und nicht mitdrehenden Aussenteil (26b), und dass zwischen dem Innenteil (26a) und dem Aussenteil (26b) ein oder mehrere Lager (29) angeordnet sind.

3. Horizontalspritzgießmaschine nach Anspruch 1 oder 2,
**dadurch gekennzeichnet, dass**
dass das Gewicht des Jochs (16) im wesentlichen auf dem Formhälftenträger (23) abgestützt ist und zwischen dem Joch (16) und dem Formhälftenträger (23) Gleit- oder Rollenlager (17) vorgesehen sind.

4. Horizontalspritzgießmaschine nach einem der vorangehenden Ansprüche
**dadurch gekennzeichnet, dass**
dass unterhalb des Formhälftenträgers (23) ein weiterer Drehverteiler (26') mit einem rotierenden Innenteil (26'a) und einem nicht drehenden Aussenteil (26'b) vorgesehen ist, wobei das Innenteil (26'a) durch eine Ausnehmung in der Grundplatte (18) hindurch nach unten ragt und das Aussenteil (26b') auf der Unterseite der Grundplatte (18) befestigt ist.

5. Horizontalspritzgießmaschine nach einem der Ansprüche 1 bis 4,
**dadurch gekennzeichnet, dass**
zwischen dem Joch (16) und den beiden Formaufspannplatten (5, 6) zu beiden Seiten des Jochs (16) wenigstens zwei Stellantriebe (27', 28', 29', 30') vorgesehen sind, und dass zwischen der Grundplatte (18) und den beiden Formaufspannplatten (5, 6) zu beiden Seiten der Grundplatte (18) ein mittig angeordneter Stellantrieb oder zwei oder mehrere aussermittig angeordnete Stellantriebe (31, 32, 33, 34) vorgesehen sind.

6. Horizontalspritzgießmaschine nach einem der Ansprüche 1 bis 4,
**dadurch gekennzeichnet, dass**
auf den dem Formhälftenträger (23) abgewandten Seiten der beiden Formaufspannplatten (5, 6) für jede der beiden Formaufspannplatten (5, 6) zwei diagonal zueinander angeordnete Stellantriebe (7, 8) vorgesehen sind, die sich einerseits an der jeweiligen Formaufspannplatte (5, 6) und andererseits an mit dem Maschinenbett (1) verbundenen Stützstreben (9a, 9b) abstützen.

7. Horizontalspritzgießmaschine mit einer feststehenden (50) und einer beweglichen Formaufspannplatte (60), mit zwischen den Formaufspannplatten (50, 60) verlaufenden Säulen (110a, 110b, 120a, 120b), sowie mit einer zwischen den Formaufspannplatten (50, 60) angeordneten und parallel zur Maschinenlängsachse verfahrbaren Dreheinrichtung für Formhälften (24a, 25a) von Spritzgießwerkzeugen,
**dadurch gekennzeichnet, dass**
das Gewicht der Dreheinrichtung vollständig in das Maschinenbett (1) eingeleitet wird und die Säulen (11 a, 11 b, 12a, 12b) von der Dreheinrichtung unbelastet bleiben, wobei die Dreheinrichtung eine auf Linearführungen (40, 41) gelagerte Grundplatte (18) und einen auf der Grundplatte (18) um eine vertikale Achse drehbar gelagerten Drehteller (21) aufweist, wobei auf dem Drehteller (21) ein Formhälftenträger (23) befestigt ist, und wobei auf der Oberseite des Formhälftenträgers (23) ein Drehzapfen mit Leitungen (27) für Medien vorgesehen ist, und dass ein Joch (16) mit einer Ausnehmung für den Drehzapfen verschieblich auf den oberen Säulen (110a, 110b) angeordnet ist und mit dem Drehzapfen in Eingriff steht.

8. Horizontalspritzgießmaschne nach Anspruch 7,
**dadurch gekennzeichnet, dass**
der Drehzapfen als Drehverteiler (26) ausgebildet ist, nämlich mit einem mit dem Formhälftenträger (23) verbundenen und mit diesem mitrotierenden Innenteil (26a) sowie einem mit dem Joch (16) verbundenen und nicht mitdrehenden Aussenteil (26b), und dass zwischen dem Innenteil (26a) und dem Aussenteil (26b) ein oder mehrere Lager (29) angeordnet sind.

9. Horizontalspritzgießmaschine nach Anspruch 7 oder 8,
**dadurch gekennzeichnet, dass**
das Gewicht des Jochs (16) im wesentlichen auf dem Formhälftenträger (23) abgestützt ist und zwischen dem Joch (16) und dem Formhälftenträger (23) Gleit- oder Rollenlager (17) vorgesehen sind.

10. Horizontalspritzgießmaschine nach einem der Ansprüche 7 bis 9,
**dadurch gekennzeichnet, dass**
unterhalb des Formhälftenträgers (23) ein weiterer Drehverteiler (26') mit einem rotierenden Innenteil (26'a) und einem nicht drehenden Aussenteil (26'b) vorgesehen ist, wobei das Innenteil (26'a) durch eine Ausnehmung in der Grundplatte (18) hindurch nach unten ragt und das Aussenteil (26'b) auf der Unterseite der Grundplatte (18) befestigt ist.

11. Horizontalspritzgießmaschine nach einem der Ansprüche 7 bis 10,
**dadurch gekennzeichnet, dass**
zum Verfahren der beweglichen Formaufspannplatte (60) zwei diagonal zueinander angeordnete Stellantriebe (46, 47) zwischen der beweglichen (60) und der feststehenden Formaufspannplatte (50) angeordnet sind, die an der Dreheinrichtung aussen vorbeigeführt sind.

12. Horizontalspritzgießmaschine nach einem der Ansprüche 7 bis 10,
**dadurch gekennzeichnet, dass**
zum Verfahren der beweglichen Formaufspannplatte (60) zwei diagonal zueinander angeordnete Stellantriebe (70, 80) zwischen der Rückseite der beweglichen Formaufspannplatte (60) und zugeordneten Stützstreben (90a, 90b) angeordnet sind, die mit dem Maschinenbett (1) verbunden sind.

13. Horizontalspritzgießmaschine nach einem der Ansprüche 7 bis 12,
**dadurch gekennzeichnet, dass**
zum Verfahren der Dreheinrichtung zwischen dem Joch (16) und der feststehenden Formaufspannplatte (50) zu beiden Seiten des Drehzapfens wenigstens zwei Stellantriebe (270, 280) sowie wenigstens ein weiterer mittig angeordneter Stellantrieb an der Grundplatte oder zwei oder mehrere aussermittig angeordnete Stellantriebe (43, 44) an der Grundplatte (18) vorgesehen sind.

14. Horizontalspritzgießmaschine nach einem der Ansprüche 7 bis 13,
**dadurch gekennzeichnet, dass**
ein Kabelschlepp (45) an dem Joch (16) befestigt ist, mit dem die Leitungen für die Medien, die dem Drehverteiler (26) zugeführt und von diesem abgeführt werden soll, flexibel die Verfahrbewegung der Dreheinrichtung mitmachen können.

15. Horizontalspritzgießmaschine nach einem der Ansprüche 1 bis 14,
**dadurch gekennzeichnet, dass**
dass es sich um eine Zwei-Platten-Horizontalspritzgießmaschine handelt und dass die Säulen (11 a, 11 b, 12a, 12b, 110a, 110b, 120a, 120b) beim Auf- und Zufahren der Formaufspannplatten (5, 6, 50, 60) mitbewegt werden.

## Claims

1. A horizontal injection moulding machine with two mould clamping plates (5, 6) that can be displaced on a machine bed (1) along a longitudinal axis of the machine, with columns (11a, 11b, 12a, 12b) that run between the two mould clamping plates (5, 6), and with a rotary device for mould halves (24a, 25a) of injection moulding tools that is fixed between the mould clamping plates (5, 6) either on or in the machine bed (1),
**characterized in that**
the weight of the rotary device is introduced completely into the machine bed (1) and the columns (11a, 11b, 12a, 12b) remain unstressed by the rotary device, wherein the rotary device has a base plate (18) fastened either on or in the machine bed (1) and a rotary table (21) that is rotatably mounted on the base plate (18) to rotate about a vertical axis, that a mould-half carrier (23) for holding mould halves (24a, 25a) of injection moulding tools is fixed to the rotary table (21), that a pivot pin comprising lines (27) for media is provided on the upper face of the mould-half carrier (23), and that a yoke (16) with a recess for the pivot pin is arranged on the upper columns (11a, 11b) and engages with the pivot pin.

2. The horizontal injection moulding machine according to claim 1,
**characterized in that**
the pivot pin is constructed as a rotary distributor (26), namely with an inner part (26a) connected with the mould-half carrier (23) and co-rotating therewith, and with an outer part (26b) connected to the yoke (16) and not co-rotating, and that between the inner part (26a) and the outer part (26b) one or more bearings (29) are arranged.

3. The horizontal injection moulding machine according to claim 1 or 2,
**characterized in that**
the weight of the yoke (16) is supported substantially on the mould-half carrier (23) and slide- or roller bearings (17) are provided between the yoke (16) and the mould-half carrier (23).

4. The horizontal injection moulding machine according to one of the preceding claims,
**characterized in that**
beneath the mould-half carrier (23) there is provided a further rotary distributor (26') with a rotating inner part (26'a) and a non-rotating outer part (26'b), wherein the inner part (26'a) projects downwards through a recess in the base plate (18) and the outer part (26b') is fastened on the underside of the base plate (18).

5. The horizontal injection moulding machine according to one of claims 1 to 4,
**characterized in that**
at least two actuating drives (27', 28', 39', 30') are provided between the yoke (16) and the two mould clamping plates (5, 6) on both sides of the yoke (16), and that between the base plate (18) and the two mould clamping plates (5, 6) a centrally arranged actuating drive or two or more eccentrically arranged actuating drives (31, 32, 33, 34) are provided on both sides of the base plate (18).

6. The horizontal injection moulding machine according to one of claims 1 to 4,
**characterized in that**
on the sides of the two mould clamping plates (5, 6), facing away from the mould-half carrier (23), for each of the two mould clamping plates (5, 6) two actuating drives (7, 8), arranged diagonally to one another, are provided, which rest on the one hand on the respective mould clamping plate (5, 6) and on the other hand on support struts (9a, 9b) connected to the machine bed (1) .

7. A horizontal injection moulding machine with a stationary mould clamping plate (50) and a movable mould clamping plate (60), with columns (110a, 110b, 120a, 120b) running between the mould clamping plates (50, 60), and with a rotary device for mould halves (24a, 25a) of injection moulding tools that is arranged between the mould clamping plates (50, 60) and is movable parallel to the longitudinal axis of the machine,
**characterized in that**
the weight of the rotary device is introduced completely into the machine bed (1), and the columns (11a, 11b, 12a, 12b) remain unstressed by the rotary device, wherein the rotary device has a base plate (18) mounted on linear guides (40, 41) and a rotary table (21) that is rotatably mounted on the base plate (18) to rotate about a vertical axis, wherein a mould-half carrier (23) is fastened on the rotary table (21), and wherein on the upper face of the mould-half carrier (23) a pivot pin with lines (27) for media is provided, and that a yoke (16) with a recess for the pivot pin is arranged displaceably on the upper columns (110a, 110b) and engages with the pivot pin.

8. The horizontal injection moulding machine according to claim 7,
**characterized in that**
the pivot pin is constructed as a rotary distributor (26), namely with an inner part (26a) connected to the mould-half carrier (23) and co-rotating therewith, and with an outer part (26b) connected to the yoke (16) and not co-rotating, and that between the inner part (26a) and the outer part (26b) one or more bearings (29) are arranged.

9. The horizontal injection moulding machine according to claim 7 or 8,
**characterized in that**
the weight of the yoke (16) is supported substantially on the mould-half carrier (23) and slide- or roller bearings (17) are provided between the yoke (16) and the mould-half carrier (23).

10. The horizontal injection moulding machine according to one of claims 7 to 9,
**characterized in that**
beneath the mould-half carrier (23) a further rotary distributor (26') is provided with a rotating inner part (26'a) and with a non-rotating outer part (26'b), wherein the inner part (26'a) projects downwards through a recess in the base plate (18) and the outer part (26'b) is fastened on the underside of the base plate (18).

11. The horizontal injection moulding machine according to one of claims 7 to 10,
**characterized in that**
for moving the movable mould-clamping plate (60), two actuating drives (46, 47), arranged diagonally to one another, are arranged between the movable mould clamping plate (60) and the stationary mould clamping plate (50), which are guided externally past the rotary device.

12. The horizontal injection moulding machine according to one of claims 7 to 10,
**characterized in that**
for moving the movable mould-clamping plate (60), two actuating drives (70, 80), arranged diagonally to one another, are arranged between the rear side of the movable mould-clamping plate (60) and associated support struts (90a, 90b), which are connected with the machine bed (1).

13. The horizontal injection moulding machine according to one of claims 7 to 12,
**characterized in that**
for moving the rotary device between the yoke (16) and the stationary mould-clamping plate (50) on both sides of the pivot pin at least two actuating drives (270, 280) and at least one further centrally arranged actuating drive are provided on the base plate or two or more eccentrically arranged actuating drives (43, 44) are provided on the base plate (18).

14. The horizontal injection moulding machine according to one of claims 7 to 13,
**characterized in that**
a cable carrier (45) is fastened to the yoke (16), by which the lines for the media, which are to be supplied to the rotary distributor (26) and conveyed away therefrom, can participate in a flexible manner in the movement of the rotary device.

15. The horizontal injection moulding machine according to one of claims 1 to 14,
**characterized in that**
it concerns a two-plate horizontal injection moulding machine and that the columns (11a, 11b, 12a, 12b, 110a, 110b, 120a, 120b) are also moved when the mould clamping plates (5, 6, 50, 60) move open and closed.

## Revendications

1. Machine de moulage par injection horizontale comprenant deux plaques de serrage de moule (5, 6) mobiles le long d'un axe longitudinal de la machine sur un lit de machine (1) comprenant des colonnes supérieures (11a, 11b, 12a, 12b) passant entre les deux plaques de serrage de moule (5, 6), ainsi qu'un dispositif rotatif agencé fixement entre les plaques de serrage de moule (5, 6) sur ou dans le lit de machine (1) pour des moitiés de moule (24a, 25a) d'outils de moulage par injection,
**caractérisée en ce que**
le poids du dispositif rotatif est introduit complètement dans le lit de machine (1) et le dispositif rotatif ne pèse pas sur les colonnes (11a, 11b, 12a, 12b), sachant que le dispositif rotatif présente une plaque de base (18) fixée sur ou dans le lit de machine (1) et un plateau rotatif (21) agencé en rotation sur un axe vertical sur la plaque de fond (18), qu'un support de moitiés de moule (23) pour recevoir des moitiés de moule (24a, 25a) d'outils de moulage par injection est fixé sur le plateau rotatif (21), que sur la face supérieure du support de moitiés de moule (23) est prévu un pivot avec des lignes (27) pour des fluides, et qu'une travée (16) avec un évidement pour le pivot est agencée sur les colonnes supérieures (11a, 11b) et est en prise avec le pivot.

2. Machine de moulage par injection horizontale selon la revendication 1,
**caractérisée en ce que**
le pivot est formé en tant que distributeur rotatif (26), à savoir avec une partie intérieure (26a) reliée au support de moitiés de moule (23) et tournant conjointement avec celui-ci, ainsi qu'une partie extérieure (26b) reliée à la travée (16) et non conjointement rotative, et qu'un ou plusieurs palier(s) (29) est/sont agencé(s) entre la partie intérieure (26a) et la partie extérieure (26b).

3. Machine de moulage par injection horizontale selon la revendication 1 ou 2,
**caractérisée en ce que**
le poids de la travée (16) est appuyé essentiellement sur le support de moitiés de moule (23) et que des paliers lisses ou des paliers à rouleaux (17) sont prévus entre la travée (16) et le support de moitiés de moule (23).

4. Machine de moulage par injection horizontale selon l'une des revendications précédentes,
**caractérisée en ce**
**qu'**en dessous du support de moitiés de moule (23) est prévu un distributeur rotatif supplémentaire (26') avec une partie intérieure rotative (26'a) et une partie extérieure non rotative (26'b), sachant que la partie intérieure (26'a) fait saillie vers le bas au travers d'un évidement dans la plaque de base (18) et la partie extérieure (26'b) est fixée sur la sous-face de la plaque de base (18).

5. Machine de moulage par injection horizontale selon l'une des revendications 1 à 4,
**caractérisée en ce**
**qu'**entre la travée (16) et les deux plaques de serrage de moule (5, 6), aux moins deux servomoteurs (27', 28', 29', 30') sont prévus des deux côtés de la travée (16), et qu'entre la plaque de base (18) et les deux plaques de serrage de moule (5, 6), des deux côtés de la plaque de base (18), sont prévus un servomoteur agencé au centre et deux ou plusieurs servomoteurs (31, 32, 33, 34) agencés excentrés.

6. Machine de moulage par injection horizontale selon l'une des revendications 1 à 4,
**caractérisée en ce**
**que** sur les côtés des deux plaques de serrage de moule (5, 6) détournés du support de plaques de moule (23), deux servomoteurs (7, 8) agencés en diagonale l'un par rapport à l'autre sont prévus pour chacune des deux plaques de serrage de moule (5, 6), lesquels s'appuient d'une part sur la plaque de serrage de moule (5, 6) respective et d'autre part sur des montants d'appui (9a, 9b) reliés au lit de machine (1).

7. Machine de moulage par injection horizontale comprenant des plaques de serrage de moule fixe (50) et mobile (60), comprenant des colonnes (110a, 110b, 120a, 120b) passant entre les plaques de serrage de moule (50, 60) ainsi qu'un dispositif rotatif agencé entre les plaques de serrage de moule (50, 60) et mobile parallèlement à l'axe longitudinal de la machine pour des moitiés de moule (24a, 25a) d'outils de moulage par injection,
**caractérisée en ce que**
le poids du dispositif rotatif est introduit complètement dans le lit de machine (1) et le dispositif rotatif ne pèse pas sur les colonnes (11a, 11b, 12a, 12b), sachant que le dispositif rotatif présente une plaque de base (18) agencée sur des guides linéaires (40, 41) et un plateau rotatif (21) agencé en rotation sur un axe vertical sur la plaque de fond (18), sachant qu'un support de moitiés de moule (23) est fixé sur le plateau rotatif (21) et sachant que sur la face supérieure du support de moitiés de moule (23) est prévu un pivot avec des lignes (27) pour des fluides, et qu'une travée (16) avec un évidement pour le pivot est agencée en étant mobile sur les colonnes supérieures (110a, 110b) et est en prise avec le pivot.

8. Machine de moulage par injection horizontale selon la revendication 7,
**caractérisée en ce que**
le pivot est formé en tant que distributeur rotatif (26), à savoir avec une partie intérieure (26a) reliée au support de moitiés de moule (23) et tournant conjointement avec celui-ci, ainsi qu'une partie extérieure (26b) reliée à la travée (16) et non conjointement rotative, et qu'un ou plusieurs palier(s) (29) est/sont agencé(s) entre la partie intérieure (26a) et la partie extérieure (26b).

9. Machine de moulage par injection horizontale selon la revendication 7 ou 8,
**caractérisée en ce que**
le poids de la travée (16) est appuyé essentiellement sur le support de moitiés de moule (23) et que des paliers lisses ou des paliers à rouleaux (17) sont prévus entre la travée (16) et le support de moitiés de moule (23).

10. Machine de moulage par injection horizontale selon l'une des revendications 7 à 9,
**caractérisée en ce**
**qu'**en dessous du support de moitiés de moule (23) est prévu un distributeur rotatif supplémentaire (26') avec une partie intérieure rotative (26'a) et une partie extérieure non rotative (26'b), sachant que la partie intérieure (26'a) fait saillie vers le bas au travers d'un évidement dans la plaque de base (18) et la partie extérieure (26'b) est fixée sur la sous-face de la plaque de base (18).

11. Machine de moulage par injection horizontale selon l'une des revendications 7 à 10,
**caractérisée en ce que**
pour déplacer la plaque de serrage de moule mobile (60), deux servomoteurs (46, 47) agencés en diagonale l'un par rapport à l'autre sont agencés entre la plaque de serrage de moule mobile (60) et la plaque de serrage de moule fixe (50), qui sont dirigés extérieurement devant le dispositif rotatif.

12. Machine de moulage par injection horizontale selon l'une des revendications 7 à 10,
**caractérisée en ce que**
pour déplacer la plaque de serrage de moule mobile (60), deux servomoteurs (70, 80) agencés en diagonale l'un par rapport à l'autre sont agencés entre le dos de la plaque de serrage de moule mobile (60) et des montants d'appui (90a, 90b) correspondants, qui sont reliés au lit de machine (1) .

13. Machine de moulage par injection horizontale selon l'une des revendications 7 à 12,
**caractérisée en ce que**
pour déplacer le dispositif mobile entre la travée (16) et la plaque de serrage de moule fixe (50), sont prévus des deux côtés du pivot au moins deux servomoteurs (270, 280) ainsi qu'au moins un servomoteur supplémentaire agencé au centre sur la plaque de base ou bien deux ou plusieurs servomoteurs (43, 44) agencés excentrés sur la plaque de base (18).

14. Machine de moulage par injection horizontale selon l'une des revendications 7 à 13,
**caractérisée en ce**
**qu'**un treuil à câble (45) est fixé sur la travée (16), avec lequel les lignes pour les fluides qui sont amenés au distributeur rotatif (26) et évacués de celui-ci, peuvent se déplacer conjointement de façon flexible avec le dispositif rotatif.

15. Machine de moulage par injection horizontale selon l'une des revendications 1 à 14,
**caractérisée en ce**
**qu'**il s'agit d'une machine de moulage par injection horizontale à deux plaques et que les colonnes (11a, 11b, 12a, 12b, 110a, 120a, 120b) sont entraînées lorsque les plaques de serrage de moule (5, 6, 50, 60) s'ouvrent et se ferment.
